# FASCICULE DE BREVET EUROPEEN

(11) **EP 1 012 122 B1**
(45) Date de publication et mention de la délivrance du brevet: **12.12.2001**
(21) Numéro de dépôt: 98940307.6
(22) Date de dépôt: 22.07.1998
(51) Int. Cl.: C02F 9/00, B01D 17/02, C02F 1/66, C02F 1/52, B01D 17/04, B01D 17/05

(54) **PROCEDE DE TRAITEMENT D'UNE EAU USEE ALCALINE**
VERFAHREN ZUR BEHANDLUNG EINES ALKALISCHEN ABWASSERS
METHOD FOR TREATING ALKALINE WASTE WATER

(30) Priorité: 22.07.1997 FR 9709290
(43) Date de publication de la demande: 28.06.2000
(73) Titulaire: Chavet, Bernard, 27210 Beuzeville (FR)
(72) Inventeur: Chavet, Bernard, 27210 Beuzeville (FR)
(74) Mandataire: Stalla-Bourdillon, Bernard
(86) Numéro de dépôt international: FR9801614
(87) Numéro de publication internationale: WO9905067

(56) Documents cités:
- EP-A- 0 534 364
- DE-A- 2 843 950
- FR-A- 2 365 525
- FR-A- 2 367 821
- FR-A- 2 384 721
- GB-A- 1 032 725

## Description

La présente invention concerne un procédé de traitement d'une eau usée alcaline provenant d'un lavage à l'eau d'une huile usagée ayant subi un traitement alcalin et contenant des matières organiques. Ce procédé permet d'obtenir une eau pouvant être notamment rejetée dans les circuits connus de traitement d'eau industriels ou directement utilisée comme base pour la préparation d'engrais ou la préparation d'un agent de lutte contre le verglas sur les revêtements routiers.

Selon la présenté invention, on entend en particulier par l'expression "lavage à l'eau d'une huile usagée ayant subi un traitement alcalin" l'étape de lavage à l'eau mise en oeuvre dans le procédé de raffinage d'huile usagée revendiqué dans la demande internationale de brevet WO-97/00928 publiée le 9 Janvier 1997. Ce procédé qui permet d'obtenir des huiles raffinées réutilisables comprend les étapes successives spécifiques consistant à distiller une huile usagée, à faire subir au distillat résultant un traitement alcalin, à effectuer un lavage à l'eau du milieu réactionnel formé et à distiller la phase huileuse récupérée après décantation à la fin du lavage à l'eau.

L'étape de lavage à l'eau de raffinage d'huiles usagées engendre par conséquent une phase aqueuse ou ci-après une "eau usée alcaline" sous forme d'une solution excessivement colorée et odorante (couleur ASTM non mesurable ; aspect noir de café et odeur de type phénolique) qui ne peut être rejetée dans les circuits traditionnels de traitement d'eau industriels et ne peut être valorisée sous quelque forme que ce soit.

D'une manière générale, une telle eau usée alcaline présente principalement les caractéristiques suivantes :

**TABLEAU 1**

| **Caractéristiques** | |
|---|---|
| • pH | supérieur à 13 |
| • Couleur | ASTM non mesurable (aspect noir de café) |
| • Densité | 1 à 1,250 |
| • Agent alcalin (soude ou potasse ; % en poids) | 1-20 |
| • Sels d'acides organiques (% en poids) | 5-50 |
| • Sels minéraux divers de l'agent alcalin (% en poids) | 0,1-4,5 |
| • Composés phénoliques (mg/L) | 0-8000 |
| • Eau (% en poids) | 30-90 |

L'agent alcalin est notamment la soude ou la potasse qui sont les agents alcalins utilisés de manière connue dans les traitements alcalins d'huile usagée, et en particulier lors de l'étape de traitement alcalin du procédé décrit dans la demande WO-97/00928 dont les conditions sont telles qu'il subsiste systématiquement une proportion d'agent alcalin n'ayant pas réagi et se retrouvant par la suite dans l'eau usée alcaline à traiter. Les sels d'acides organiques sont quant à eux d'origines diverses mais proviennent principalement d'acides organiques initialement présents dans l'huile usagée, et qui lors du traitement à l'agent alcalin se transforment en sels correspondants. Ils peuvent également provenir de composés esters présents de manière connue dans les huiles lubrifiantes commercialisées, ces esters s'étant décomposés lors du traitement alcalin à haute température pour former des acides et des alcools eux-mêmes transformés en acides étant donné le caractère oxydant et la température du milieu réactionnel, ces acides formant des sels correspondants avec l'agent alcalin.

Les sels minéraux divers de l'agent alcalin présents dans l'eau usée alcaline ont été formés par action de l'agent alcalin lors du traitement alcalin sur les divers contaminants présents dans les huiles usagées traitées, tels que les composés du chlore, phosphore et du silicium, et dont les anions correspondants sont par exemple Cl⁻, PO₄³⁻ et SiO₃²⁻.

Enfin, les composés phénoliques sont ceux habituellement présents dans les huiles usagées telles que celles traitées par le procédé WO-97/00928. Parmi ces composés phénoliques, on peut citer en particulier le phénol, les o-, m- et p-crésols et les di- et tri-méthylphénols (incluant bien entendu tous les isomères de ces derniers). Leur teneur est faible mais suffisante pour procurer une couleur et une odeur à éliminer. Elle est mesurée notamment par la méthode selon la norme référencée NF XPT 90109 par l'AFNOR.

Il faut donc comprendre que cette eau usée alcaline est une solution complexe dont il est difficile de maîtriser en particulier la nature exacte des acides et esters organiques présents compte tenu du caractère confidentiel de la composition des huiles lubrifiantes usagées dont ils proviennent.

Une première solution pour traiter une telle eau usée alcaline consistait à effectuer une incinération de cette dernière mais il est clair qu'un tel procédé présente un bilan thermique économiquement rédhibitoire. On a également tenté d'effectuer une évaporation avant l'incinération mais là encore un tel procédé n'est pas économiquement viable. On a alors cherché à séparer les composés organiques de cette eau usée alcaline en utilisant tout d'abord des procédés physiques de séparation tels que la filtration, la filtration tangentielle, l'ultrafiltration, ou encore la centrifugation sans obtenir un quelconque résultat satisfaisant dans la mesure où il s'est avéré que l'eau usée alcaline à traiter se présente sous forme d'une seule phase liquide.

Outre ces procédés physiques infructueux, on a tenté d'effectuer une neutralisation de cette eau usée alcaline mais il s'est avéré impossible d'obtenir un quelconque effet de séparation des composés organiques dans ces conditions. On a alors tenté de favoriser une séparation en augmentant la température lors de cette neutralisation ce qui, là encore, s'est révélé tout à fait infructueux, même en laissant l'eau usée alcaline en contact avec l'agent de neutralisation pendant un temps plus important.

On a maintenant trouvé de manière surprenante et inattendue qu'il était possible d'obtenir, à partir d'une telle eau usée alcaline, une eau limpide décolorée, et exempte de composés organiques, grâce à un procédé comprenant une succession d'étapes spécifiques dont l'ordre est essentiel afin d'obtenir un tel résultat.

La présente invention a ainsi pour objet un procédé de traitement d'une eau usée alcaline provenant de l'étape de lavage à l'eau d'une huile usagée ayant subi un traitement alcalin et contenant des matières organiques, ce procédé étant caractérisé par le fait qu'il comprend une suite déterminée d'étapes consistant :
a) à mettre en contact l'eau usée alcaline, à une température comprise entre environ 60 et 105°C, pendant un temps compris entre environ 5 et 60 minutes, avec un acide minéral en une quantité supérieure de 1 à 20 % à celle correspondant à la stoechiométrie de la réaction transformant en sel minéral la totalité des atomes alcalins présents dans l'eau usée alcaline à traiter ;
b) à laisser décanter les phases organique et aqueuse ainsi obtenues, à une température comprise entre environ 60 et 105°C, pour récupérer la phase aqueuse acide ;
c) à mettre en contact la phase aqueuse acide, à une température comprise entre environ 65 et 95°C, avec une solution alcaline en quantité suffisante pour obtenir un pH du milieu réactionnel compris entre 7,5 et 9, puis à laisser reposer le milieu réactionnel, à une température comprise entre environ 40 et 95°C, pour obtenir la formation puis la décantation d'un floculat, et à filtrer pour récupérer la phase aqueuse.

L'acide minéral utilisé dans l'étape a) est en particulier choisi dans le groupe constitué par l'acide chlorhydrique, l'acide nitrique, l'acide sulfurique, l'acide phosphorique et un mélange de ces derniers.

La quantité d'acide minéral utilisée à l'étape a) se calcule donc d'après celle correspondant à la stoechiométrie de la réaction transformant en sel minéral la totalité des atomes alcalins présents dans l'eau usée alcaline à traiter. Pour cela, on détermine le nombre total d'atomes alcalins, en pratique en mesurant la proportion en poids des atomes de sodium et/ou de potassium, présents sous diverses formes dans l'eau usée alcaline à traiter, par exemple par analyse plasma selon la norme ASTM D5185. D'après l'acide minéral utilisé, on déduit la stoechiométrie de la réaction transformant un atome alcalin (sodium ou potassium) en sel minéral et on détermine ainsi la quantité d'acide minéral nécessaire pour réagir avec le nombre total d'atomes alcalins, mesuré comme indiqué ci-dessus, pour en déduire la valeur supérieure de 1 à 20 % à cette quantité, cette valeur correspondant à la quantité d'acide minéral devant être utilisée dans l'étape a). On a en effet constaté de manière tout à fait surprenante et inattendue que seule cette quantité supérieure de 1 à 20 %, associée à la température utilisée, permet d'obtenir la formation d'une phase aqueuse et d'une phase organique à partir de l'eau usée alcaline à traiter, la phase organique contenant en particulier les acides organiques mentionnés ci-dessus.

Selon un mode de réalisation préféré de la présente invention, la quantité d'acide minéral utilisée dans l'étape a) est supérieure de 8 à 12 % à celle correspondant à ladite stoechiométrie.

L'acide minéral est mis en contact avec l'eau usée alcaline de manière connue, en particulier sous agitation à l'aide d'un dispositif d'agitation tel qu'une turbine ou un mélangeur statique.

L'eau usée alcaline est de préférence mise en contact avec l'acide minéral à une température comprise entre environ 90 et 95°C, et de préférence pendant un temps compris entre environ 20 et 40 minutes.

A la fin de l'étape a), on constate la formation d'une phase organique et d'une phase aqueuse acide que l'on laisse décanter l'une de l'autre selon l'étape b) telle que décrite ci-dessus. La décantation est en particulier une simple décantation gravimétrique. De préférence, on laisse décanter en maintenant une température comprise entre environ 90 et 95°C.

Lorsque la décantation est achevée, on filtre et on récupère la phase aqueuse pour la mettre en contact avec une solution alcaline selon l'étape c) du présent procédé.

Dans l'étape c), la solution alcaline est de préférence une solution aqueuse à base d'un agent alcalin choisi parmi la soude, la potasse, et un mélange de ces dernières, la concentration dudit agent alcalin étant comprise entre environ 5 et 50 % en poids par rapport au poids total de ladite solution alcaline.

En particulier, la concentration de l'agent alcalin est comprise entre environ 10 et 30 % en poids par rapport au poids total de la solution alcaline. La quantité de cette solution alcaline à utiliser sera déterminée par l'homme du métier utilisant ses connaissances générales en vue d'obtenir un pH du milieu réactionriel compris entre environ 7,5 et 9.

De préférence, on utilise une quantité de solution alcaline telle que le pH du milieu réactionnel soit compris entre environ 8 et 8,5.

La température utilisée pour mettre en contact la phase aqueuse avec la solution alcaline est de préférence comprise entre environ 65 et 90°C. La mise en contact de la phase aqueuse avec la solution alcaline est effectuée sous agitation de la même façon que pour l'étape a).

La valeur de pH souhaitée ayant été atteinte, on cesse alors l'agitation et on laisse reposer le milieu réactionnel, de préférence à une température comprise entre environ 65 et 90°C. Dès l'arrêt de l'agitation, on constate la formation d'un trouble dans le milieu réactionnel qui résulte de la formation d'un floculat, complète en moins d'une heure. Le milieu réactionnel étant laissé au repos, le floculat formé décante par sédimentation en quelques heures, on filtre à l'aide de moyens connus et l'on récupère ensuite la phase aqueuse exempte de ce floculat.

La phase aqueuse ainsi récupérée est limpide et renferme des quantités non significatives de composés hydrocarbonés (moins de 10 mg/kg). Toutefois, cette phase aqueuse n'est pas totalement incolore et peut dans certains cas posséder une légère odeur due à la présence de composés phénoliques.

Ainsi, selon un mode de réalisation particulier, le présent procédé comprend en outre l'étape consistant à mettre en contact cette phase aqueuse récupérée à l'issue de l'étape c), à une température comprise entre environ 65 et 95°C et pendant un temps compris entre environ 10 et 60 minutes, avec au moins un agent d'élimination des composés phénoliques. Cet agent est de préférence choisi dans le groupe constitué par l'eau oxygénée comprenant éventuellement un système catalytique à base d'ions ferreux, le charbon actif, l'hypochlorite de soude et un mélange de ces derniers.

Lorsque l'agent d'élimination des composés phénoliques est l'eau oxygénée, il s'agit de préférence d'eau oxygénée à 110 volumes (environ 33 % en poids) et on l'utilise à raison d'environ 0,5 à 30 % en volume et de préférence à raison d'environ 2 à 15 % en volume, par rapport au volume de la phase aqueuse à traiter.

Cette eau oxygénée peut avantageusement comprendre un système catalytique à base d'ions ferreux, en particulier une solution aqueuse de sulfate ferreux (de formule FeSO₄, 7H₂O). On utilise dans ce cas le système catalytique à base d'ions ferreux de préférence à raison d'environ 0,1 à 1,5 % en poids et plus particulièrement à raison d'environ 0,2 à 0,5 % en poids de fer par rapport au poids de la phase aqueuse à traiter.

Lorsque l'agent d'élimination des composés phénoliques est du charbon actif, on l'utilise à raison d'environ 0,2 à 1 % en poids, de préférence à raison d'environ 0,3 à 0,6 % en poids, par rapport au poids de la phase aqueuse à traiter.

Enfin, lorsque l'agent d'élimination des composés phénoliques est l'hypochlorite de soude, il s'agit de préférence d'hypochlorite de soude à 55° chlorométrique français (soit environ à 36 % en poids). On l'utilise à raison d'environ 1 à 60 % en volume, de préférence à raison d'environ 10 à 30 % en volume par rapport au volume de la phase aqueuse à traiter.

Bien entendu, on peut utiliser plusieurs de ces différents agents d'élimination des composés phénoliques soit successivement soit en mélange, selon la phase aqueuse à traiter. Cette étape supplémentaire permet d'obtenir au terme du présent procédé une phase aqueuse décolorée, désodorisée et renfermant une- teneur en composés phénoliques très réduite.

Selon un autre mode de réalisation particulier de la présente invention, on peut mettre en oeuvre cette étape supplémentaire directement sur l'eau usée alcaline à traiter, c'est-à-dire avant l'étape a), dans les mêmes conditions que ci-dessus en considérant que l'eau usée alcaline de départ représente la phase aqueuse à traiter.

Enfin, selon un mode de réalisation particulièrement préféré, on met en oeuvre cette étape supplémentaire avec l'agent d'élimination des composés phénoliques pour traiter la phase aqueuse acide récupérée à l'issue de l'étape b) et avant le début de l'étape c). Ce mode de réalisation s'est avéré en effet considérablement efficace, de manière tout à fait surprenante et inattendue, dans la mesure où l'élimination des composés phénoliques est quasi totale. La phase aqueuse acide ainsi débarrassée des composés phénoliques est ensuite soumise à l'étape c) à l'issue de laquelle on récupère une phase aqueuse incolore et inodore. Si tel n'est pas le cas, on peut envisager de mettre cette phase aqueuse à nouveau en contact avec un agent d'élimination de composés phénoliques comme décrit ci-dessus.

Bien entendu, il n'est pas exclu de pouvoir mettre en oeuvre cette étape supplémentaire avec l'agent d'élimination des composés phénoliques à plusieurs reprises, selon les différents modes de réalisation décrits ci-dessus, au cours du procédé selon l'invention.

Dans tous les cas, après mise en contact d'une phase aqueuse avec l'agent d'élimination des composés phénoliques, on laisse décanter le milieu réactionnel puis on filtre à l'aide de moyens connus pour récupérer la phase aqueuse ainsi traitée.

Le présent procédé permet également d'obtenir une phase organique, à l'issue de l'étape b). Selon un mode de réalisation préféré de la présente invention, on lave à l'eau cette phase organique, à une température comprise entre environ 70 et 100°C selon un rapport volumique eau:phase organique compris entre environ 1:10 et 1:1, puis on laisse décanter pour récupérer la phase organique ainsi traitée. De préférence, cette étape de lavage à l'eau de la phase organique est effectuée en utilisant un rapport volumique eau:phase organique compris entre 2:10 et 4:10, et de préférence à une température comprise entre environ 90 et 95°C.

Le présent procédé permet donc, à partir d'une eau usée alcaline, d'obtenir respectivement une phase aqueuse et une phase organique. La phase aqueuse peut être rejetée dans les circuits connus de traitement d'eau industriels. De manière avantageuse, cette phase aqueuse peut être valorisée dans la mesure où elle est riche en sels minéraux résultant essentiellement de l'acide minéral introduit à l'étape a) et des atomes alcalins présents dans l'eau usée alcaline de départ et ceux introduits via la solution alcaline à l'étape c). Ainsi, suivant l'acide minéral utilisé et les atomes alcalins présents (sodium et/ou potassium), cette phase aqueuse comprend une proportion importante de sels minéraux tels que KCl, NaCl, KNO₃, NaNO₃, K₂SO₄, Na₂SO₄ ou encore K₃PO₄. La phase aqueuse contient également les sels minéraux divers de l'agent alcalin présent dans l'eau usée alcaline de départ tels que mentionnés au début de la présente demande. On peut donc avantageusement utiliser une telle phase aqueuse comme base pour la préparation d'engrais ou encore comme base pour la préparation d'un agent de lutte contre la formation de verglas sur les revêtements routiers.

De même, la phase organique obtenue à l'issue du présent procédé est riche en acides organiques divers en fonction de l'eau usée alcaline de départ comme expliqué au début de la présente demande. Ainsi, de manière avantageuse, on peut valoriser cette phase organique en l'utilisant comme substitut d'acides organiques, en particulier comme substitut d'acides naphténiques pour l'acidification des bitumes.

Les exemples suivants sont destinés à illustrer la présente invention sans pour autant en limiter la portée.

### EXEMPLE 1

On réalise l'étape de traitement alcalin selon la demande internationale WO-97/00928 sur un distillat d'huile usagée avec 4 % d'une solution potassique à 50 % en poids à 244°C pendant 30 minutes. Après refroidissement, on effectue l'étape de lavage en utilisant un volume d'eau égal à 10 % du volume à laver. Après décantation, on recueille l'eau de lavage dont les caractéristiques sont les suivantes :

| **Caractéristiques** | |
|---|---|
| • pH | supérieur à 13 |
| • Couleur | ASTM non mesurable (aspect noir de café) |
| • Densité | 1,1117 |
| • Agent alcalin (potasse ; % en poids) | 7,65 |
| • Sels potassiques organiques (% en poids) | 14,20 |
| • Sels potassiques minéraux divers (% en poids) | 0,7 |
| • Composés phénoliques (mg/mL) | 820 |
| • Eau (% en poids) | 78,15 |

Par analyse plasma selon ASTM D5185, on détermine une proportion en poids de potassium total de 8,8 % par rapport au poids total de cette eau usée alcaline à traiter.

Cette dernière est traitée selon le procédé de l'invention, de la manière suivante.

Dans un réacteur industriel, on met en contact l'eau usée alcaline, sous agitation à 1500 tr/minutes, à une température de 92°C, avec de l'acide chlorhydrique (35 % en poids ; densité 1,17) à raison de 24,6 volumes d'acide pour 100 volumes d'eau usée alcaline (comprenant donc 0,25 mole de potassium au total) pendant un temps de 25 minutes (on utilise donc une quantité d'acide chlorhydrique supérieure de 10,4 % à celle correspondant à la stoechiométrie de la réaction transformant en sel minéral la totalité des atomes de potassium présents dans l'eau usée alcaline à traiter).

Après 3 heures de décantation à la même température, on récupère une phase inférieure aqueuse ayant un pH de 0,65 et une phase supérieure huileuse représentant 8,7 % en poids du poids total de l'eau usée alcaline de départ.

### Traitement de la phase aqueuse

On sépare la phase inférieure aqueuse acide récupérée, en deux parties égales.

On met en contact, sous agitation, la première partie de la phase inférieure aqueuse, à une température de 88°C, avec une solution aqueuse de potasse à 25 % en poids, pour obtenir un pH du milieu réactionnel de 8,5. On laisse ensuite reposer le milieu réactionnel à la même température pendant un temps de 5 heures. On constate pendant ce temps la formation d'un floculat dont le sédiment obtenu par décantation représente 0,28 % en poids par rapport au poids total de la phase inférieure aqueuse traitée. Après filtration à l'aide d'un filtre lent (de porosité 3 *µ*m) tel que commercialisé par la Société DURIEUX, la phase aqueuse alcaline résultante est limpide mais encore légèrement colorée et marquée par une très faible odeur. On vérifie qu'elle contient moins de 10 mg/kg de composés hydrocarbonés divers et que la teneur en composés phénoliques est d'environ 324 mg/L.

Afin de réduire cette teneur en composés phénoliques résiduels, on met en contact cette phase aqueuse alcaline résultante, à une température d'environ 92°C, pendant environ 45 minutes avec de l'eau oxygénée à 110 volumes, à raison de 10 parties d'eau oxygénée pour 100 parties de phase aqueuse à traiter. Après décantation et filtration, à l'aide d'un filtre lent (de porosité 3 *µ*m) tel que commercialisé par la Société DURIEUX, on récupère une eau totalement désodorisée, décolorée et dont la teneur en composés phénoliques est d'environ 92 mg/L.

On effectue également le traitement à l'eau oxygénée dans les mêmes conditions mais à partir de la deuxième partie de la phase inférieure acide aqueuse récupérée comme indiqué ci-dessus. La phase aqueuse récupérée ainsi traitée est ensuite soumise à l'étape c) du présent procédé en étant mise en contact avec la solution aqueuse potassique à 25 % dans les mêmes conditions indiquées ci-dessus pour la première partie de la phase inférieure acide aqueuse. Après décantation par sédimentation du floculat, on filtre et on récupère une phase aqueuse totalement désodorisée et décolorée, dont la teneur en composés phénoliques est de 3 mg/L.

Ces deux phases aqueuses obtenues par le procédé selon l'invention peuvent être rejetées dans les circuits de traitement d'eau industriels ou, de manière avantageuse, être valorisées sous forme d'une base aqueuse pour la préparation d'engrais ou la préparation d'un agent de lutte contre la formation de verglas sur le revêtement routier.

### Traitement de la phase supérieure organique

On effectue un lavage à l'eau, à 90°C, de cette phase organique supérieure en utilisant un volume d'eau représentant 50 % du volume de phase organique à laver. Après décantation, on récupère une phase organique ayant les caractéristiques suivantes :

| | |
|---|---|
| densité | 0,908 |
| indice d'acide | 164 mg KOH/g |
| potassium | 6 mg/kg |
| viscosité à 40°C | 72 mm²/s |
| corrosion du cuivre ⁽¹⁾ | 1A |

| | |
|---|---|
| ⁽¹⁾mesurée par la méthode suivant la norme référencée NF M 07015 (3 heures à 100°C) par l'AFNOR. Selon cette méthode, la valeur "1A" correspondant à l'absence totale de caractère corrosif. | |

La phase organique ainsi obtenue selon le présent procédé peut être avantageusement utilisée comme substitut d'acide naphténique pour l'acidification de bitumes.

### EXEMPLE 2

On reproduit les mêmes opérations de l'exemple 1 à partir de la même eau usée alcaline où la phase inférieure acide aqueuse obtenue à l'issue de l'étape b) selon le présent procédé est mise en contact avec l'eau oxygénée dans les mêmes conditions que pour ladite deuxième partie de la phase inférieure acide aqueuse à l'exemple 1 excepté que l'eau oxygénée comprend en outre une solution aqueuse à 30 % en poids de sulfate ferreux (FeSO₄, 7H₂O), à raison de 0,25 % en poids de fer par rapport au poids de la phase inférieure acide aqueuse à traiter. Après mise en contact avec la solution potassique, décantation et filtration, dans les mêmes conditions qu'à l'exemple 1, on récupère une phase aqueuse totalement désodorisée et décolorée, et dont la teneur en composés phénoliques est de 0,8 mg/L.

## Revendications

1. Procédé de traitement d'une eau usée alcaline provenant d'un lavage à l'eau d'une huile usagée et contenant des matières organiques, **caractérisé par le fait qu'**il comprend, une suite déterminée d'étapes consistant :
a) à mettre en contact l'eau usée alcaline, à une température comprise entre 60 et 105°C, pendant un temps compris entre 5 et 60 minutes, avec un acide minéral en une quantité supérieure de 1 à 20 % à celle correspondant à la stoechiométrie de la réaction transformant en sel minéral la totalité des atomes alcalins présents dans l'eau usée alcaline à traiter ;
b) à laisser décanter les phases organique et aqueuse ainsi obtenues, à une température comprise entre 60 et 105°C, pour récupérer la phase aqueuse acide ;
c) à mettre en contact la phase aqueuse acide, à une température comprise entre 40 et 95°C, avec une solution alcaline en quantité suffisante pour obtenir un pH du milieu réactionnel compris entre 7,5 et 9, puis à laisser reposer le milieu réactionnel, à une température comprise entre 40 et 95°C, pour obtenir la formation puis la décantation d'un floculat, et à filtrer pour récupérer la phase aqueuse.

2. Procédé selon la revendication 1, **caractérisé par le fait que** l'acide minéral est choisi dans le groupe constitué par l'acide chlorhydrique, l'acide nitrique, l'acide sulfurique, l'acide phosphorique, et un mélange de ces derniers.

3. Procédé selon la revendication 1 ou 2, **caractérisé par le fait que** l'acide minéral est utilisé selon une quantité supérieure de 8 à 12 % à celle correspondant à ladite stoechiométrie.

4. Procédé selon l'une quelconque des revendications précédentes, **caractérisé par le fait que** l'on met en contact l'eau usée alcaline avec ledit acide minéral à une température comprise entre 90 et 95°C.

5. Procédé selon l'une quelconque des revendications précédentes, **caractérisé par le fait que** l'on met en contact l'eau usée alcaline avec ledit acide minéral pendant un temps compris entre 20 et 40 minutes.

6. Procédé selon l'une quelconque des revendications précédentes, **caractérisé par le fait qu'**on laisse décanter à l'étape b) à une température comprise entre 90 et 95°C.

7. Procédé selon l'une quelconque des revendications précédentes, **caractérisé par le fait que** ladite solution alcaline de l'étape c) est une solution aqueuse à base d'un agent alcalin choisi parmi la soude, la potasse, et un mélange de ces dernières, la concentration dudit agent alcalin étant comprise entre 5 et 50 % en poids par rapport au poids total de ladite solution alcaline.

8. Procédé selon la revendication 7, **caractérisé par le fait que** ladite concentration dudit agent alcalin est comprise entre 10 et 30 % en poids par rapport au poids total de ladite solution alcaline.

9. Procédé selon la revendication 7 ou 8, **caractérisé par le fait que** ledit pH du milieu réactionnel obtenu est compris entre 8 et 8,5.

10. Procédé selon l'une quelconque des revendications précédentes, **caractérisé par le fait qu'**il comprend en outre l'étape consistant à mettre en contact ladite phase aqueuse récupérée à l'issue de l'étape c), à une température comprise entre 65 et 95°C et pendant un temps compris entre 10 et 60 minutes, avec un agent d'élimination des composés phénoliques choisi dans le groupe constitué par l'eau oxygénée comprenant éventuellement un système catalytique à base d'ions ferreux, le charbon actif, l'hypochlorite de soude et un mélange de ces derniers, à laisser ensuite décanter puis à filtrer pour récupérer la phase aqueuse.

11. Procédé selon l'une quelconque des revendications précédentes, **caractérisé par le fait qu'**il comprend en outre l'étape consistant à mettre en contact ladite eau usée alcaline, avant l'étape a), à une température comprise entre 65 et 95°C et pendant un temps compris entre 10 et 60 minutes, avec un agent d'élimination des composés phénoliques choisi dans le groupe constitué par l'eau oxygénée comprenant éventuellement un système catalytique à base d'ions ferreux, le charbon actif, l'hypochlorite de soude et un mélange de ces derniers, à laisser ensuite décanter puis à filtrer pour récupérer l'eau usée alcaline à traiter selon l'étape a).

12. Procédé selon l'une quelconque des revendications précédentes, **caractérisé par le fait qu'**il comprend en outre l'étape consistant à mettre en contact ladite phase aqueuse récupérée à l'issue de l'étape b), à une température comprise entre 65 et 95°C et pendant un temps compris entre 10 et 60 minutes, avec un agent d'élimination des composés phénoliques choisi dans le groupe constitué par l'eau oxygénée comprenant éventuellement un système catalytique à base d'ions ferreux, le charbon actif, l'hypochlorite de soude et un mélange de ces derniers, à laisser ensuite décanter puis à filtrer pour récupérer la phase aqueuse.

13. Procédé selon l'une quelconque des revendications 10 à 12, **caractérisé par le fait que** ledit système catalytique à base d'ions ferreux est une solution aqueuse de sulfate ferreux.

14. Procédé selon l'une quelconque des revendications précédentes, **caractérisé par le fait qu'**il comprend en outre l'étape consistant à laver à l'eau la phase organique obtenue à l'issue de l'étape b), à une température comprise entre 70 et 100°C, selon un rapport volumique eau:phase organique compris entre 1:10 et 1:1 puis à laisser décanter pour récupérer la phase organique.

15. Procédé selon la revendication 14, **caractérisé par le fait que** ledit rapport volumique eau:phase organique est compris entre 2:10 et 4:10.

16. Procédé selon la revendication 14 ou 15, **caractérisé par le fait que** l'on lave à l'eau ladite phase organique obtenue à l'issue de l'étape b) à une température comprise entre 90 et 95°C.

17. Utilisation de la phase aqueuse obtenue par le procédé selon l'une quelconque des revendications 1 à 13 comme phase aqueuse de base pour la préparation d'engrais.

18. Utilisation de la phase aqueuse obtenue par le procédé selon l'une quelconque des revendications 1 à 13 comme phase aqueuse de base pour la préparation d'un agent de lutte contre la formation de verglas sur les revêtements routiers.

19. Utilisation de la phase organique obtenue par le procédé selon l'une quelconque des revendications 14, 15 ou 16 comme substitut d'acides organiques.

20. Utilisation de la phase organique obtenue par le procédé selon l'une des revendications 14, 15 ou 16 comme substitut d'acides naphténiques pour l'acidification des bitumes.

## Claims

1. Method for processing an alkaline waste water resulting from the water washing of a used oil and containing organic matters, which is **characterized by** the following specific channel of steps comprising :
a) contacting the alkaline waste water, at a temperature between 60°C and 105°C, during 5 to 60 minutes, with an inorganic acid in excess of 1 to 20% above stoechiometry to convert all alkaline atoms into inorganic salts,
b) settling the resulting organic and aqueous phases thus obtained, at a temperature comprised between 60 and 105°C to recover the acidic aqueous phase,
c) contacting the acidic aqueous phase, at a temperature between 40 and 95°C, with an alkaline solution to reach a pH value of the reaction mixture comprised between 7,5 and 9, then settling the reaction mixture at a temperature comprised between 40 and 95°C to generate and settle a floc and subsequently filtering to recover the aqueous phase.

2. Process according to claim 1, wherein the inorganic acid is selected from hydrochloric, sulfuric, phosphoric acids and a mixture thereof.

3. Process according to claim 1 or 2 wherein the inorganic acid is used in an amount above 8 to 12% to the amount corresponding to the stoechiometry.

4. Process according to anyone of the above claims wherein the alkaline waste water is contacted with the said inorganic acid at a temperature comprised between 90 and 95°C.

5. Process according to anyone of the above claims wherein the alkaline waste water is contacted with the inorganic acid during a time comprised between 20 to 40 minutes.

6. Process according to anyone of the above claims wherein the settling in step b) is carried out at a temperature comprised between 90 and 95°C.

7. Process according to anyone of the above claims wherein the alkaline solution of step c) is an aqueous solution of an alkaline agent selected from sodium hydroxide, potassium hydroxide and a mixture thereof, the concentration of said alkaline agent being comprised between 5 and 50 % by weight in relation to the total weight of said alkaline solution.

8. Process according to claim 7, wherein the said concentration of said alkaline agent is comprised between 10 and 30 % by weight in relation to the total weight of the alkaline solution.

9. Process according to claim 7 or 8, wherein the said pH value of the reaction mixture is comprised between 8 and 8,5.

10. Process, according to anyone of the above claims which further comprises an additional step, consisting in contacting the aqueous phase recovered from step c), at a temperature comprised between 65 and 95°C, during 10 to 60 minutes, with a reactant to eliminate the phenolic compounds said reactant being selected from hydrogen peroxide optionally comprising a catalytic system for ferrous ions, activated carbon, sodium hypochlorite and a mixture thereof, then settling and filtering to recover the aqueous phase.

11. Process according to anyone of the above claims which further comprises an additional step consisting in contacting the alkaline waste water before step a) at a temperature comprised between 65 and 95°C during a time comprised between 10 to 60 minutes with a reactant to eliminate the phenolic compounds said reactant being selected from hydrogen peroxide optionally comprising a catalytic system for ferrous ions, activated carbon, sodium hypochlorite and a mixture thereof, then settling and filtering to recover the waste alkaline water, to be processed according to step a).

12. Process according to anyone of the above claims which further comprises an additional step consisting in contacting the aqueous phase recovered from step b), at a temperature comprised between 65 and 95°C during a time comprised between 10 to 60 minutes, with a reactant to eliminate the phenolic compounds said reactant being selected from hydrogen peroxide optionally comprising a catalytic system for ferrous ions, activated carbon, sodium hypochlorite and a mixture thereof, then settling and filtering to recover the aqueous phase.

13. Process according to claims 10, 11 or 12, wherein the said catalytic system based on ferrous ions is an aqueous solution of ferrous sulfate.

14. Process according to anyone of the above claims wherein the organic phase from step b) is washed with water between 70 and 100°C, with a water/organic phase volume ratio between 1/10 and 1/1 then settling to recover the organic phase.

15. Process according to claim 14 wherein the said volume ratio water : organic phase is comprised between 2:10 and 4:10.

16. Process according to claim 14 or 15 wherein the organic phase from step b) is water washed at a temperature comprised between 90 and 95°C.

17. Use of the aqueous phase resulting from the process according to anyone of claims 1 to 13 as a raw material for the manufacture of fertilizers.

18. Use of the aqueous phase resulting from the process according to anyone of claims 1 to 13 as a raw material for the manufacture of anti-icing agents for road surfaces.

19. Use of the organic phase resulting from the process according to anyone claims 14, 15 or 16 as a substitute of organic acids.

20. Use of the organic phase resulting from the process according to anyone of claims 14, 15 or 16 as a substitute of naphthenic acids to acidify bitumen.

## Patentansprüche

1. Verfahren zur Behandlung eines alkalischen Abwassers, das aus der Waschung eines verbrauchten Öls mit Wasser stammt und organisches Material enthält, **dadurch gekennzeichnet, dass** es eine vorbestimmte Folge von Schritten umfaßt, bestehend aus:
(a) dem In- Kontakt-bringen des alkalischen Abwassers bei einer Temperatur zwischen 60 °C und 105 °C für eine Zeit zwischen 5 und 60 Minuten mit einer Mineralsäure in einer Menge oberhalb von 1 bis 20 % derjenigen Menge, die der Stöchiometrie der Reaktion entspricht, die die Gesamtheit der in dem zu behandelnden alkalischem Abwasser vorhandenen Alkaliatome in Mineralsalz umwandelt;
(b) Klären lassen der so erhaltenen organischen und wäßrigen Phasen bei einer Temperatur zwischen 60 °C und 105 °C zur Rückgewinnung der sauren wäßrigen Phase;
(c) In- Kontakt-bringen der sauren wäßrigen Phase bei einer Temperatur zwischen 40 °C und 95 °C mit einer alkalischen Lösung in ausreichender Menge zum Erhalt eines pH-Werts des Reaktionsmilieus zwischen 7,5 und 9, anschließend Setzen lassen das Reaktionsmilieus bei einer Temperatur zwischen 40 °C und 95 °C, um die Bildung von Flocken nach Dekantieren zu erzielen, und Filtrieren zum Rückgewinnen der wäßrigen Phase.

2. Verfahren gemäß Anspruch 1, **dadurch gekennzeichnet, dass** die Mineralsäure ausgewählt ist aus der Gruppe, bestehend aus Salzsäure, Salpetersäure, Schwefelsäure, Phosphorsäure und einer Mischung derselben.

3. Verfahren gemäß Anspruch 1 oder 2, **dadurch gekennzeichnet, dass** die Mineralsäure in einer Menge oberhalb von 8 bis 12 % derjenigen verwendet wird, die der besagten Stöchiometrie entspricht.

4. Verfahren gemäß einer der vorstehenden Ansprüche, **dadurch gekennzeichnet, dass** man das alkalische Abwasser mit der Mineralsäure bei einer Temperatur zwischen 90 °C und 95 °C in Kontakt bringt.

5. Verfahren gemäß einem der vorstehenden Ansprüche, **dadurch gekennzeichnet, dass** man das alkalische Abwasser mit der Mineralsäure für eine Zeit zwischen 20 und 40 Minuten in Kontakt bringt.

6. Verfahren gemäß einem der vorstehenden Ansprüche, **dadurch gekennzeichnet, dass** man in Schritt (b) bei einer Temperatur zwischen 90 °C und 95 °C absetzen bzw klären lässt.

7. Verfahren gemäß einem der vorstehenden Ansprüche, **dadurch gekennzeichnet, dass** die alkalische Lösung in Schritt (c) eine wäßrige Lösung auf Basis eines alkalischen Mittels darstellt, ausgewählt unter Soda, Pottasche und einer Mischung derselben, wobei die Konzentration des alkalischen Mittels zwischen 5 und 50 Gew.-% liegt, bezogen auf das Gesamtgewicht der alkalischen Lösung.

8. Verfahren gemäß Anspruch 7, **dadurch gekennzeichnet, dass** die Konzentration des alkalischen Mittels zwischen 10 und 30 Gew.-% liegt, bezogen auf das Gesamtgewicht der alkalischen Lösung.

9. Verfahren gemäß Anspruch 7 oder 8, **dadurch gekennzeichnet, dass** der pH-Wert des erhaltenen Reaktionsmilieus zwischen 8 und 8,5 liegt.

10. Verfahren gemäß einem der vorstehenden Ansprüche, **dadurch gekennzeichnet, dass** es zusätzlich einen Schritt umfasst, bestehend aus In- Kontakt-bringen der wäßrigen Phase, die am Ende aus Schritt (c) wiedergewonnen wird, bei einer Temperatur zwischen 65 °C und 95 °C und für eine Zeit zwischen 10 und 60 Minuten mit einem Mittel zum Eliminieren von phenolischen Verbindungen, ausgewählt aus der Gruppe, bestehend aus sauerstoffhaltigem Wasser, gegebenenfalls enthaltend ein katalytisches System auf Basis von Eisenionen, Aktivkohle, Natriumhypochlorit und einer Mischung derselben, danach Klären bzw. Absetzen lassen, anschließend Filtrieren zur Wiedergewinnung der wäßrigen Phase.

11. Verfahren gemäß einem der vorstehenden Ansprüche, **dadurch gekennzeichnet, dass** es zusätzlich den Schritt umfasst, bestehend aus dem In- Kontakt-bringen des alkalischen Abwassers vor Schritt (a) bei einer Temperatur zwischen 65 °C und 95 °C und für eine Zeit zwischen 10 und 60 Minuten mit einem Mittel zum Eliminieren von phenolischen Verbindungen, ausgewählt aus der Gruppe, bestehend aus sauerstoffhaltigem Wasser, gegebenenfalls enthaltend ein katalystisches System auf Basis von Eisenionen, Aktivkohle, Natriumhypochlorit und einer Mischung derselben, anschließendes Klären bzw. Absetzen lassen, danach Filtrieren zur Wiedergewinnung des gemäß Schritt (a) zu behandelnden alkalischen Abwassers.

12. Verfahren gemäß einem der vorstehenden Ansprüche, **dadurch gekennzeichnet, dass** es zusätzlich den Schritt umfaßt, bestehend aus In- Kontakt-bringen der am Ende von Schritt (b) wiedergewonnenen wäßrigen Phase bei einer Temperatur von 65 °C bis 95 °C und für eine Zeit zwischen 10 und 60 Minuten mit einem Mittel zum Eliminieren von phenolischen Verbindungen, ausgewählt aus der Gruppe, bestehend aus sauerstoffhaltigem Wasser, gegebenenfalls enthaltend ein katalytisches System auf Basis von Eisenionen, Aktivkohle, Natriumhypochlorit und einer Mischung derselschließendes Klären bzw. Absetzen lassen, danach Filtrieren zur Wiedergewinnung der wäßrigen Phase.

13. Verfahren gemäß einem der Ansprüche 10 bis 12, **dadurch gekennzeichnet, dass** das katalytische System auf Basis von Eisenionen eine wäßrige Eisensulfatfösung ist.

14. Verfahren gemäß einem der vorstehenden Ansprüche, **dadurch gekennzeichnet, dass** es zusätzlich den Schritt umfaßt, bestehend aus dem Waschen der am Ende von Schritt (b) erhaltenen organischen Phase mit Wasser bei einer Temperatur zwischen 70 °C und 100 °C bei einem Volumenverhältnis Wasser:organische Phase zwischen 1:10 und 1:1, anschließendes Klären bzw. Absetzen lassen zur Wiedergewinnung der organischen Phase.

15. Verfahren gemäß Anspruch 14, **dadurch gekennzeichnet, dass** das Volumenverhältnis Wasser:organische Phase zwischen 2:10 und 4:10 liegt.

16. Verfahren gemäß Anspruch 14 oder 15, **dadurch gekennzeichnet, dass** man die am Ende von Schritt (b) erhaltene organische Phase mit dem Wasser bei einer Temperatur zwischen 90 °C und 95 °C wäscht.

17. Verwendung der aus dem Verfahren gemäß einem der Ansprüche 1 bis 13 erhaltenen wäßrigen Phase als wäßrige Ausgangsphase für die Herstellung von Düngemittel.

18. Verwendung der aus dem Verfahren gemäß einem der Ansprüche 1 bis 13 erhaltenen wäßrigen Phase als wäßrige Ausgangsphase für die Herstellung eines Mittels gegen die Bildung von Glatteis auf Straßendecken.

19. Verwendung der aus dem Verfahren gemäß einem der Ansprüche 14, 15 oder 16 erhaltenen organischen Phase als Ersatz für organische Säuren.

20. Verwendung der aus dem Verfahren gemäß einem der Ansprüche 14, 15 oder 16 erhaltenen organischen Phase als Ersatz für Naphthensäuren zur Azidifizierung bzw. Ansäuerung von Bitumen.
